# EUROPEAN PATENT APPLICATION

(11) **EP 1 094 657 A1**
(43) Date of publication of application: **25.04.2001**
(21) Application number: 99308219.7
(22) Date of filing: 18.10.1999
(51) Int. Cl.: H04M 3/56

(54) **Mobile conferencing system and method**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

A method of and apparatus for representing a user on a display device in a telecommunications conference facility by means of graphical representations corresponding to respective users is provided. In this invention which the conference facility may be accessed by using a plurality of different types of access devices, and the representation of a user is indicative of the access device type used by the user to access the conference facility. The representation of the user is also indicative of the degree of privacy and attention capability of the user, and of the quality of service experienced by the user. The representation may also show whether the user is stationary or on the move. It is possible for the user to manually indicate the desired representation.

## Description

This invention relates to a method of and apparatus for representing a user on a display device in a telecommunications conferencing (teleconferencing) facility by means of graphical representations. In a teleconferencing facility images are generated relating to a "virtual meeting space". Individuals at a plurality of locations remote from each other, and accessing the facility using different types of access device may interact with each other in a manner which emulates a conventional meeting.

Individual users are represented in the virtual meeting space display by computer-generated representations of the users, known as "avatars" (or "icons"). These may be derived from video images of the users, either live or retrieved from a store, but usually they are digitally generated representations. In general, each user is able to select the appearance of his or her avatar in the virtual space from a menu of characteristics. Alternatively, each individual user may be able to select, for his own viewpoint, how each of the other users' avatars will appear. Other characteristics of the meeting space, such as the colour and shape of the elements of the meeting space, may also be selectable by the user.

According to the present invention there is provided a method of representing a user on a display device in a telecommunications conference facility by means of graphical representations corresponding to respective users, the conference facility being accessible by a plurality of different types of access devices, and in which the representation of a user is indicative of the access device type used by said user to access said conference facility.

In a preferred embodiment of the invention the access device type is a mobile device and in which the representation is indicative of the quality of service available to said user.

Preferably the representation is indicative of whether said user is able to attend to the teleconference and/or the degree of privacy of said user, and/or whether the user is moving.

Advantageously the access device has input keys and in which the user may indicate a desired representation using a predetermined key or sequence of keys.

According to another aspect of the invention there is also provided a telecommunications conferencing system, accessible by a plurality of access device types, comprising display control means for representing users on display devices by means of graphical representations corresponding to respective users, the display control means being arranged to represent a user according to the device type used by said user to access the system.

In a preferred embodiment the access device type is a mobile device and in which the display control means is arranged to represent a user according to the quality of service available to said user.

Preferably the display control means is arranged to represent a user according to whether said user is able to attend to the teleconference and/or the degree of privacy of said user and/or whether said user is moving.

Advantageously, the access device has input keys and in which the user may indicate a desired representation to the display control means using a predetermined key or sequence of keys.

An embodiment of the invention will now be described by way of example only with reference to the accompanying drawings, in which:
Figure 1 shows a network with human/machine interface units serving teleconference users via respective client apparatuses;
Figure 2 is a representation of a teleconference as displayed on an interface unit of Figure 1;
Figure 3a is a block diagram showing a client apparatus of Figure 1 which incorporates a physical and location sensor;
Figure 3b is a functional block diagram showing the logical operation of the apparatus shown in Figure 3a; and
Figures 4 to 7 are examples of representations of a user as shown on an interface unit of Figure 1, in which the representation of the user is dependent upon location and physical data collected using the apparatus shown in Figure 3a.

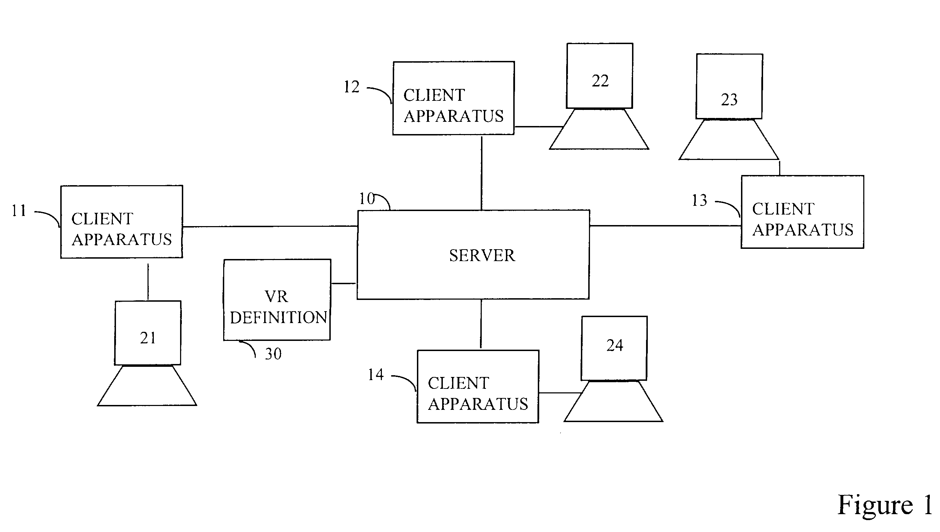

Figure 1 shows a network serving four users 1, 2, 3, 4 (not shown) allowing them to interact in a virtual teleconference. Each user has a respective human/machine interface unit 21, 22, 23, 24, which includes video and/or audio equipment for the user to see and/or hear what is happening in the virtual meeting space. The interface unit includes user input devices (e.g. audio input, keyboard or keypad, computer "mouse" etc.) to enable the user to provide input to the virtual meeting space. Each interface unit, 21, 22, 23, 24 is connected to a respective client apparatus 11, 12, 13, 14 which provides an interface between the user and a main server 10 which controls the operation of the meeting space. The server 10 has, as a further input, a virtual reality (VR) definition store 30 which maintains permanent data defining the virtual meeting space (also referred to as the meeting space definition unit in the specification). The control of the meeting space is carried out by interaction between the client apparatuses 11, 12, 13, 14 and the server 10. The display control functions may take place in the server 10, or the display control functions may be distributed in the client apparatus 11, 12, 13, 14, depending on the functionality available in the client apparatus. Links between the client apparatus 11, 12, 13, 14 and the server 10 may be permanent hard-wired connections, virtual connections (permanent as perceived by the user, but provided over shared lines by the telecommunications provider), or dial-up connections (available on demand, and provided on a pay-per-use basis), and may include radio links, for example to a mobile device. The server 10 may have, in addition to the server functionality, similar functionality to the client apparatus 11, 12, 13, 14, but as shown the server 10 is dedicated to the server function only.

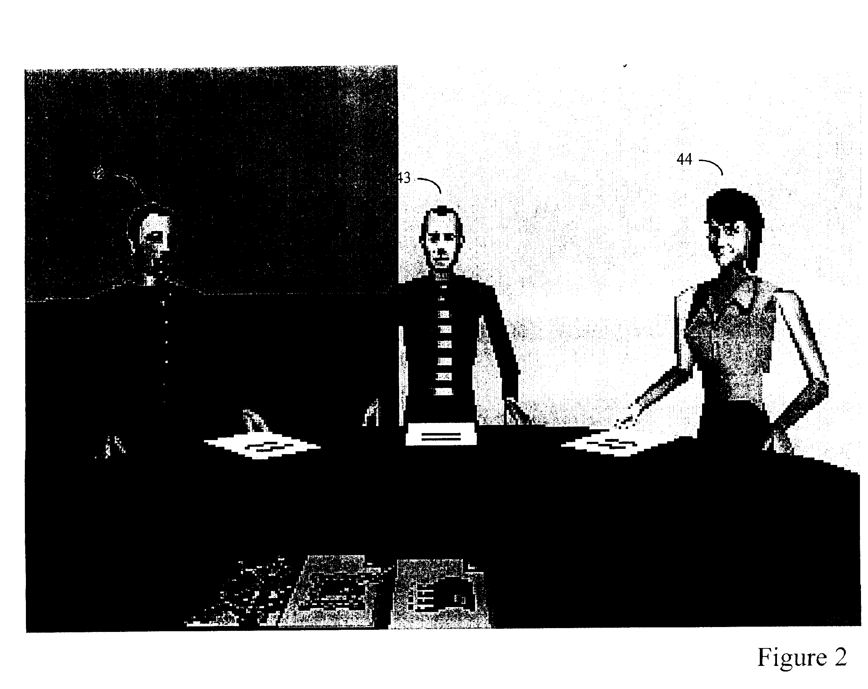

An example of an image representing a meeting space as it appears on a display device is shown in Figure 2. In this example, users 2, 3 and 4 are represented by avatars 42, 43 and 44 respectively.

Referring again to Figure 1, in response to inputs from one of the users (e.g. user 1) through his respective user interface 21 the client apparatus 11 transmits these inputs to the main server 10 which, in accordance with the meeting space definition unit 30, controls the images to be represented on the other users' screens in the human machine interface units 22, 23, 24 to represent the activities of the user 1, input through interface device 21. As a very simple example, the actions of the user 1 when first establishing contact with the meeting space are translated by the client apparatus 11 and converted by the server 10, into a representation of the user 1 entering the meeting space, which is in turn passed to the individual clients 12, 13, 14 to be represented as the avatar of the user 1 moving into the field of view of the display devices 22, 23, 24.

The manner of representation of the individual user 1 in the virtual space, for example the appearance of the avatar in terms of age, sex, hair colour etc may be selected either by the user 1 through his respective client device 11, or by each receiving user 2, 3, 4 in the meeting space, who may each select an avatar according to his own requirements to represent the user 1. Similarly, some parts of the virtual meeting space may be defined centrally in the meeting space definition unit 30, whereas other aspects may be defined by each individual client apparatus 11, 12, 13, 14 independently of the others. Such definitions may include colour schemes, the relative locations in the virtual meeting space of the individual users 1, 2, 3, 4, etc.

The client apparatus 11 is a mobile device, and in the embodiment of the invention described here the mobile device 11 is a wireless palmtop computer. In this specification the term mobile device is intended to refer to all computing devices which may be carried around or worn by a user, and may be used whilst the user is moving around and active in other tasks. Mobile devices are distinguished from portable devices which are carried to a location and then used whilst the user is stationary.

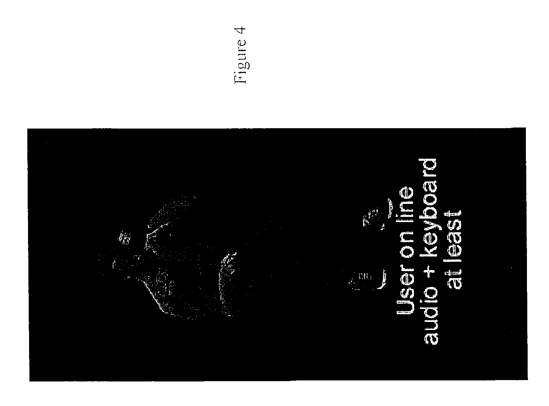

However, a mobile device may or may not have visual display capabilities. Even if the device does have such capabilities, the user 1 may be walking or running or otherwise distracted, and may not be able to attend to a visual display. The representation of the user 1 is displayed to the other users 2, 3, 4 as shown in Figure 4, so that the other users are aware that user 1 is on line, but that the user 1 may not have a visual link to the teleconference.

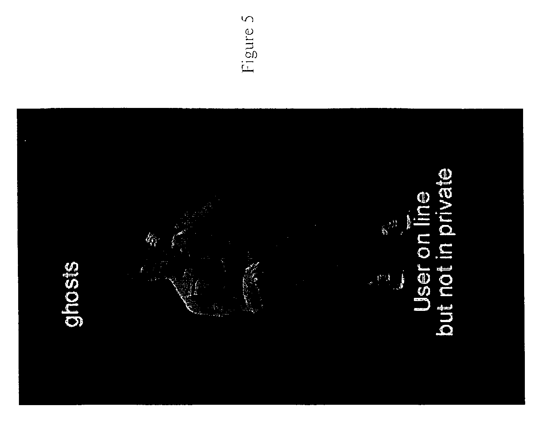

For users using a mobile device there are other aspects of the service to consider beside the fact that the client device 11 may not have as sophisticated input and output capabilities as other client devices 12, 13, 14 . Privacy may be an issue. It is possible that other people might move in and out of the user's proximity during a conversation. In order to make the other users in a conference aware of potential privacy issues the user's avatar is changed as shown in Figure 5 to indicate that the user is on line, but that the user may not be in private. The user 1 can indicate that there is a privacy issue manually, by transmitting a signal via the client 11 to the server 10 using a predetermined key or sequence of keys. The device 11 has an audio input, and as an alternative to using a manually entered key or sequence of keys to indicate the user is not in private, the received audio signal is analysed, using known speaker recognition algorithms, to determine whether speech other than that from the user is detected. The device 11 may also be equipped with a video input, in which case the video signal received via the video input can be analysed using known image classification algorithms, for example to detect wither there is skin detected in the captured image, or to detect the number of faces in the captured image. The results of such image classification may then be used to indicate to the server 10 that the user is not in private and the user's avatar is modified accordingly.

Another issue which is relevant to mobile users using radio links to access the virtual meeting space is Quality of Service (QoS). The fixed telephony network uses 64Kbits/s per voice channel while the mobile network uses 9.6 Kbits/s per voice channel. The average number of bits per second transmitted from the client device 11 to the server 10 is monitored by the server 10. The avatar of the user 1 is modified to be more or less opaque as a function of the average number of bits per second received by the server 10 from the client device 11. Hence the opacity of the avatar representing the user 1 related to the QoS as perceived by other users 2, 3, 4. In this embodiment of the invention the more opaque the avatar the better the perceived QoS.

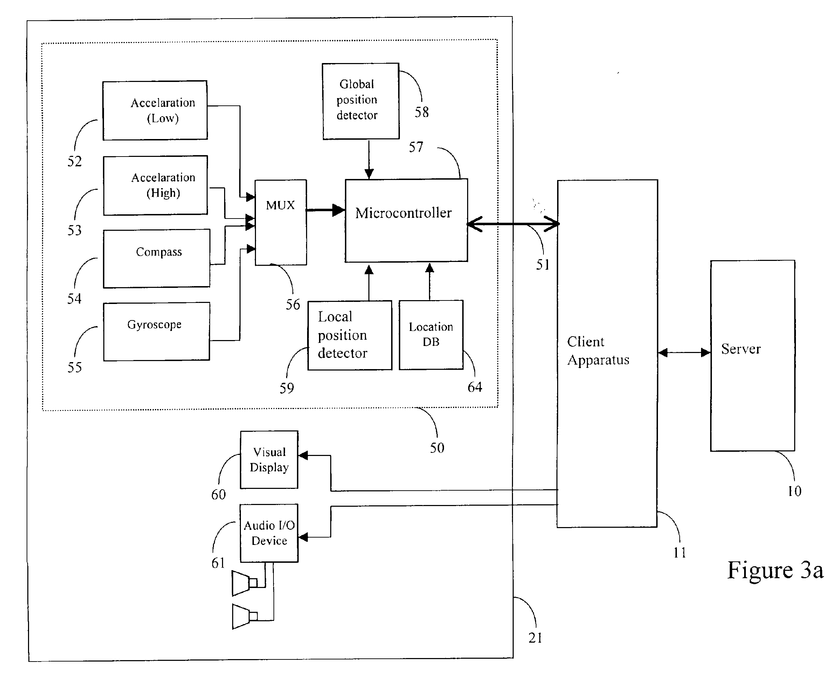

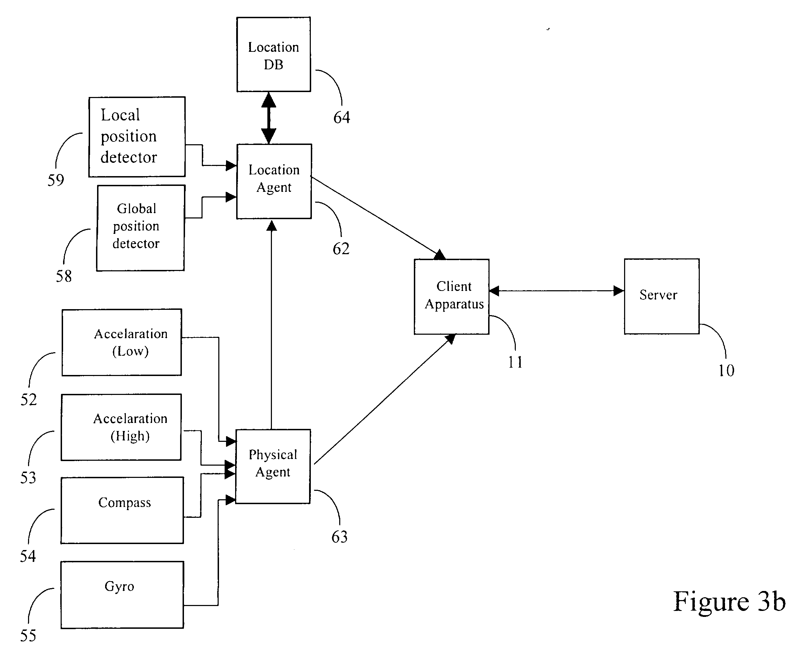

For a mobile user, the attention paid to the virtual meeting space varies in dependence upon the 'real world' task currently being carried out. For example, whilst travelling on a train a user may be required to show a ticket to the ticket inspector, or somebody may speak to the user to ask the time. If the user is walking, running, or unable to remain still for some reason, then the attention paid to the virtual meeting space will be more limited than otherwise. If the user is in a noisy environment, again, the attention paid to the virtual meeting space will be less than it would be in a very quiet environment. Detection of a user's physical and location attributes is discussed in more detail with reference to Figure 3a and 3b.

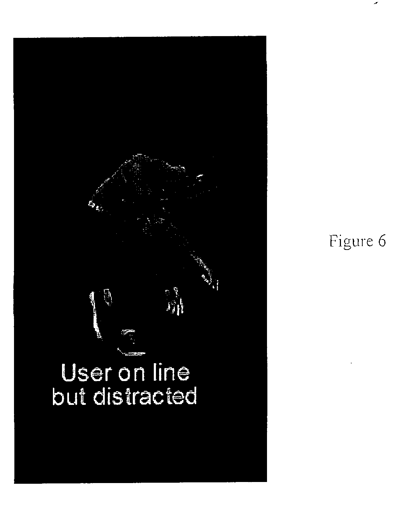

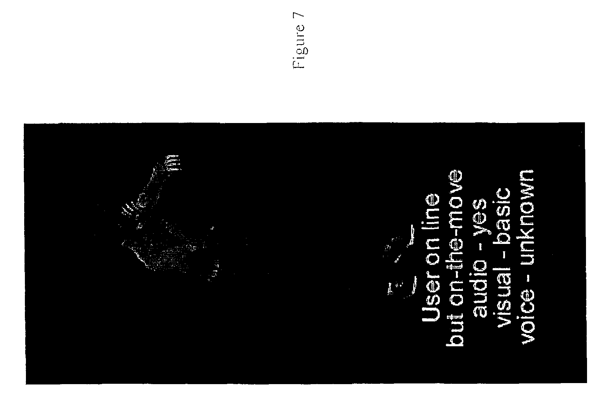

The audio environment is analysed using the audio signal received via the audio input on the client apparatus 11. It is also possible for the user to use a predetermined key or sequence of keys to indicate via the client apparatus 11 to the server 10 that he is distracted or on the move. Figure 6 shows a representation of a user who is on-line but distracted, and Figure 7 shows a representation of a user who is on line but on the move.

The user interface unit 21 includes a physical and location sensor 50 as shown in Figure 3, as well as a visual display 60 and an audio input/output device 61. The physical and location sensor 50 is connected to the client apparatus 11 by a serial interface 51. A low acceleration detector 52 measures acceleration of a low force in two directions using an ADXL202. A high acceleration detector 53 measures acceleration of a high force in three directions using an ACH04-08-05 available from Measurement Specialities Incorporated (which can be referenced via Universal Resource Locator (URL) http://www.msiusa.com on the Internet). A direction detector 54 is provided using a compass which gives an absolute measurement of orientation of the client apparatus. A HMC2003, available from Honywell (URL http://www.ssechoneywell.com), is used. The compass is a three-axis magnetometer sensitive to fields along the length, width and height of the device. A direction and velocity detector 55 is provided using an ENC Piezoelectric Vibrating Gyroscope (part number S42E-2 which is sold under the registered trademark GYROSTAR) available from Murata manufacturing Company Ltd. (URL http://www.murata.com). The gyroscope measures angular velocity, giving speed and direction in two directions in each axis of rotation (i. e. six measurements are provided). The acceleration detectors 52, 53, the direction detector 54 and the velocity and direction detector 55 are connected via a multiplexer (MUX) 56 to a microcontroller 57 where the outputs are analysed as will be described later.

A global position detector 58 is provided which measures the absolute location of the device using a Global Positioning System (GPS) receiver which receives signal from GPS satellites.

GPS provides specially coded satellite signals that can be processed in a GPS receiver, enabling the receiver to compute position, velocity and time. The nominal GPS Operational Constellation consists of 24 satellites that orbit the earth twice a day, 11,000 miles above the earth. (There are often more than 24 operational satellites as new ones are launched to replace older satellites.) The satellite orbits repeat almost the same ground track (as the earth turns beneath them) once each day. There are six orbital planes (with nominally four satellites in each), equally spaced (60 degrees apart), and inclined at about fifty-five degrees with respect to the equatorial plane. This constellation provides the user with from five to eight satellites visible from any point on the earth. The GPS satellites orbit the earth transmitting their precise position and elevation. A GPS receiver acquires the signal, then measures the interval between transmission and receipt of the signal to determine the distance between the receiver and the satellite. Once the receiver has calculated this data for at least 3 satellites, its location on the earth's surface can be determined.

The receiver used in this embodiment of the invention is a Garmin GPS35 unit (available, for example from Lowe Electronics Ltd in the UK). GPS signals do not propagate inside buildings so a local position detector 59 is also provided which uses local area beacons (LAB's) (not shown) which use low power 418MHz AM radio transmitters (such as the CR91Y, CR72P, CR73Q or CR74R from RF Solutions) at known locations within a building. Radio or infrared transmitters could be used, although radio provides a more robust solution since line of sight connections are not required.

Once the "Bluetooth" radio based system becomes available this will also provide a suitable solution. Bluetooth is a standard for wireless connectivity, designed to replace cables between portable consumer devices such as cellular phones, laptop computers, personal digital assistants, digital cameras, and many other products. The Bluetooth version 1.0 specification was agreed in July 1999, and the first products are expected on the market in mid 2000.

Software on the microcontroller 57 gathers sensor data from the detectors 52, 53, 54, 55, via the MUX 56 which is configured to read each device in turn via an analogue port. The output from the global position detector 58 is read via a serial port connection and the output from the local position detector 59 is connected to a digital input on the microcontroller 57. Also provided is a location database 64 which is accessed by the microcontroller 57 to determine location names.

Figure 3b is a functional block diagram showing the logical operation of the physical and location detector 50. A location agent 62, implemented in software on the microcontroller 57, uses location data gathered by the global position detector 58 and the local position detector 59, analyses this data and makes the analysis available to the client apparatus 11. The location agent 62 also receives information about velocity and direction, measured by the direction detector 54 and the velocity and direction detector 55, from a physical agent 63. The physical agent is also implemented in software in the microcontroller 57.

The location agent determines whether GPS is available, and whether the global location measured by the global position detector 58 is based on a signal from three or more satellites. The local position detector 59 detects signals from LAB's, each of which has a unique identifier. The location agent 62 accesses the location database 64 to determine a location name associated with a received LAB identifier. The location agent 62 must be able to determine the following:
- Is the device inside or outside? If less than three GPS signals are received then the device is determined to be inside.
- Is the device moving? A measured velocity from the global position detector 58 (if the device is outside) and velocity measured via the physical agent 63 are used to determine whether the device is moving.
- Location of the device. Latitude and longitude, if the device is outside, are measured via the global position detector 58 and/or a location name is determined using the local position detector 59 and the location database 64.
- Direction of movement. This may be determined by the global position detector and /or by direction data received from the physical agent.

The physical agent 63 analyses physical sensor data and makes this available to the location agent 62. The physical agent is used to determine the following user attributes.
- Standing.
- Walking.
- Sitting.
- Cadence (velocity).
- Acceleration.
- Shock.

The complex nature of the physical data makes the use of simple rules unreliable. The physical agent 63 of this embodiment of the invention uses Hidden Markov Models (HMM) to provide a determination above based on the inputs from the detectors 52, 53, 54, 55, 56. A good description of an implementation of HMM's (as applied to speech recognition, but the principles are the same) may be found in "Hidden Markov Models for Automatic Speech Recognition: Theory and Application" S.J. Cox, British Telecom Technology Journal Vol. 6, No. 2, April 1988. In other embodiments of the invention it is possible for the physical agent to analyse visual and audio information received from the visual and audio input/output device provided as part of the interface unit 21.

The client apparatus 11 has the physical information made available to it via the physical agent 63, and the location information made available to it via the location agent 62. Audio and/or visual information is used on the mobile device to provide the user with information alerts, and for teleconferencing activity. Spatial audio is also used for information alerts and for spatialised teleconferencing, which appears more natural to the user.

The interface used by the device for information alerts, and the interface used for teleconferencing are dependent on the user's current location and physical context (i. e. is the user standing/ walking/sitting etc). If the user is unlikely to be able to attend to a visual display, an audio interface is used. If the user is likely to be unavailable (eg running) then the device could divert alerts to a messaging service, which could then alert the user when it is determined he is available again. In embodiments of the invention incorporating audio input and analysis it is also possible to configure the audio output on the user's wearable or handheld device to match the acoustics, ambient noise level etc of the real world space in which the user is located. The nature of the interface used (for example the sound of a mobile device's alert or 'ring-tone') can be modified according to the detected user location. For example, a mobile phone handset could use a ring-tone such as a voice saying "shop at the Harrods' sale" if it is determined by the location agent 62 that the user is walking along Knightsbridge (where the famous shop 'Harrods' is located). A phone could use an appropriate piece of music if it is determined by the location agent 62 that the user is in church. Similarly to changing the users' audio interface in dependence on the detected location, the visual display can be altered according to the determined location. The screen style of the visual interface can be made to reflect the theme of the location. For example if the user is viewing web pages, and is walking around a museum, the web pages viewed as the user moves to different locations change to reflect the area of the museum.

In embodiments of the invention including the analysis of visual and audio information received from a visual and audio input/output device provided as part of the interface unit 21, it is possible to use standard speech and video analysis algorithms to provide a more sophisticated interface to the user. There are standard algorithms for identifying speech within an audio stream so it would be possible to make a mobile phone handset that auto diverted or changed ring tone if the user is detected to be currently in conversation with someone. Visual information can also be analysed using standard algorithms such as skin detection or face detection and this information can be used along with audio analysis to infer whether the user is likely to be in private, for example.

## Claims

1. A method of representing a user on a display device in a telecommunications conference facility by means of graphical representations corresponding to respective users, the conference facility being accessible by a plurality of different types of access devices, and in which the representation of a user is indicative of the access device type used by said user to access said conference facility.

2. A method according to claim 1, in which said access device type is a mobile device and in which the representation is indicative of the quality of service available to said user.

3. A method according to claim 1 or claim 2, in which the representation is indicative of whether said user is able to attend to the teleconference.

4. A method according to any one of claims 1, 2 or 3 in which the representation is indicative of the degree of privacy of said user.

5. A method according to any one of claims 1 to 4, in which the representation is indicative of whether said user is moving.

6. A method according to any one of claims 1 to 5, in which the access device has input keys and in which the user may indicate a desired representation using a predetermined key or sequence of keys.

7. A telecommunications conferencing system, accessible by a plurality of access device types, comprising display control means for representing users on display devices by means of graphical representations corresponding to respective users, the display control means being arranged to represent a user according to the device type used by said user to access the system.

8. A system according to claim 1, in which said access device type is a mobile device and in which the display control means is arranged to represent a user according to the quality of service available to said user.

9. A system according to claim 7 or claim 8, in which the display control means is arranged to represent a user according to whether said user is able to attend to the teleconference.

10. A system according to any one of claims 7, 8 or 9 in which the display control means is arranged to represent a user according to the degree of privacy of said user.

11. A system according to any one of claims 7 to 10, in which the display control means is arranged to represent a user according to whether said user is moving.

12. A system according to any one of claims 7 to 11, in which the access device has input keys and in which the user may indicate a desired representation to the display control means using a predetermined key or sequence of keys.
